# EUROPÄISCHE PATENTSCHRIFT

(11) **EP 0 527 455 B1**
(45) Veröffentlichungstag und Bekanntmachung des Hinweises auf die Patenterteilung: **13.03.1996**
(21) Anmeldenummer: 92113547.1
(22) Anmeldetag: 08.08.1992
(51) Int. Cl.: B60R 1/06

(54) **Halterung für einen Aussenspiegel für ein Nutzfahrzeug**
Support for the exterior rear view mirror of a utility vehicle
Support de miroir retroviseur extérieur pour un véhicule utilitaire

(30) Priorität: 10.08.1991 DE 4126523
(43) Veröffentlichungstag der Anmeldung: 17.02.1993
(73) Patentinhaber: MEKRA Rangau Plastics GmbH & Co KG, D-90765 Fürth (DE)
(72) Erfinder: Lang, Heinrich, W-8531 Ergersheim (DE); Seiboth, Wolfgang, W-8532 Bad Windsheim (DE)
(74) Vertreter: Rau, Manfred, Dr. Dipl.-Ing.

(56) Entgegenhaltungen:
- DE-A- 2 239 853
- GB-A- 980 585

## Beschreibung

Die Erfindung betrifft eine Halterung für einen Außenspiegel nach dem Oberbegriff des Anspruches 1.

Eine derartige Halterung für einen Außenspiegel ist aus der DE-B-22 39 853 bekannt. Diese Halterung weist einen Haltearm auf, der gegen ein Reibmoment und unter Lösen einer elastischen Rastverbindung gegenüber dem Lagerbock verschwenkbar ist. Die Rastverbindung umfaßt einen Rast-Vorsprung sowie eine Rast-Ausnehmung, die ineinandergreifen und die an einem gegenüber dem Lagerbock festen Teil sowie einem gegenüber dem Lagerbock in Richtung der Schwenkachse des Haltearmes gegen die Kraft einer Druckfeder verschiebbaren Teil ausgebildet sind. Mit dem Haltearm ist ein Mitnehmer drehfest verbunden, auf dem der verschiebbare Teil drehfest, aber in Richtung der Schwenkachse verschiebbar geführt ist. Bei dem Mitnehmer handelt es sich um einen Querstift, der den als Ringkörper ausgebildeten verschiebbaren Teil drehfest mit dem Haltearm verbindet, wobei der Ringkörper in Richtung der Schwenkachse verschiebbar ist.

Der Erfindung liegt die Aufgabe zugrunde, die Halterung nach der vorgenannten Druckschrift dahingehend weiterzubilden, daß der Mitnehmer konstruktiv verbessert ist.

Diese Aufgabe wird erfindungsgemäß durch die Merkmale im Kennzeichnungsteil des Anspruches 1 gelöst. Durch die erfindungsgemäßen Maßnahmen wird weiterhin erreicht, daß der Spiegel bei Auftreten auf ein Hindernis unter Lösen der elastischen Rastverbindung verschwenkt werden kann. Ein Rückschwenken führt dazu, daß die Rastverbindung wieder geschlossen wird. Dadurch daß zusätzlich zu der Rastverbindung eine Reibverbindung vorgesehen ist, die eine hohe Haftreibung aufweist, ist eine hohe Vibrationsfestigkeit des Spiegels sichergestellt. Die konstruktive Lösung außerordentlich einfach.

Die Unteransprüche geben vorteilhafte Weiterbildungen der Erfindung wieder.

Weitere Vorteile, Merkmale und Einzelheiten der Erfindung ergeben sich aus der nachfolgenden Beschreibung eines Ausführungsbeispiels anhand der Zeichnung. Es zeigt
- Fig. 1: eine Draufsicht auf einen Spiegel mit Haltearm und Lagerbock,
- Fig. 2: einen Teil-Schnitt durch den Haltearm und den Lagerbock einer ersten Haltungsausführung
- Fig. 3: einen Querschnitt durch den Lagerbock entsprechend der Schnittlinie III-III in Fig. 2,
- Fig. 4: einen Teilquerschnitt durch den Haltearm und den Lagerbock einer zweiten Halterungsausführung und
- Fig. 5: einen Querschnitt durch den Lagerbock entsprechend der Schnittlinie V-V in Fig. 4.

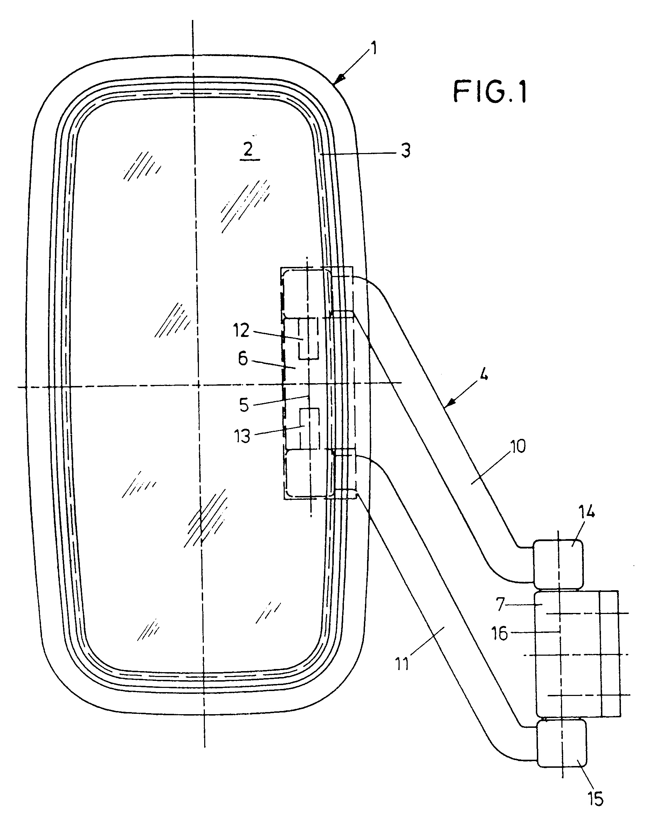

In Fig. 1 ist ein Rückblickspiegel dargestellt, bei dem es sich um einen Außen-Rückblickspiegel für ein Nutzfahrzeug handelt. Dieser weist ein Gehäuse 1 auf, in dem eine Spiegelscheibe 2 mittels eines Halterahmens 3 gehalten ist. Am Gehäuse 1 ist ein doppelarmiger Haltearm 4 um eine Achse 5 schwenkbar mittels eines Klemmstücks 6 angebracht.

An seinem anderen Ende ist der Haltearm 4 an einem Lagerbock 7 schwenkbar angebracht, der wiederum am Führerhaus des Nutzfahrzeuges anbringbar ist. Er liegt mit einer Anlagefläche 8 an dem nicht dargestellten Führerhaus an und wird dort mittels Schrauben befestigt, die in Gewindelöcher 9 des Lagerbocks 7 eingeschraubt werden.

Der doppelarmige Haltearm 4 besteht aus einem oberen Haltearm 10 und einem unteren Haltearm 11, die einander paarweise zugeordnet bzw. zugewandt sind. An ihrem dem Gehäuse 1 zugewandten Ende weisen sie jeweils einen Schwenkzapfen 12,13 auf, die miteinander fluchten und zur Achse 5 konzentrisch sind und die mittels des Klemmstücks 6 am Gehäuse 1 gehalten werden. An ihren am Lagerbock 7 angebrachten Enden sind sie mit Gelenkteilen 14,15 versehen, die am Lagerbock 7 in noch genauer zu beschreibender Weise um eine Schwenkachse 16 schwenkbar angebracht sind. Die Schwenkachse 16 und die Achse 5 verlaufen parallel zueinander, d.h. die beiden Haltearme 10,11 befinden sich in einer gemeinsamen Ebene, die durch die Achse 5 und die Schwenkachse 16 aufgespannt wird.

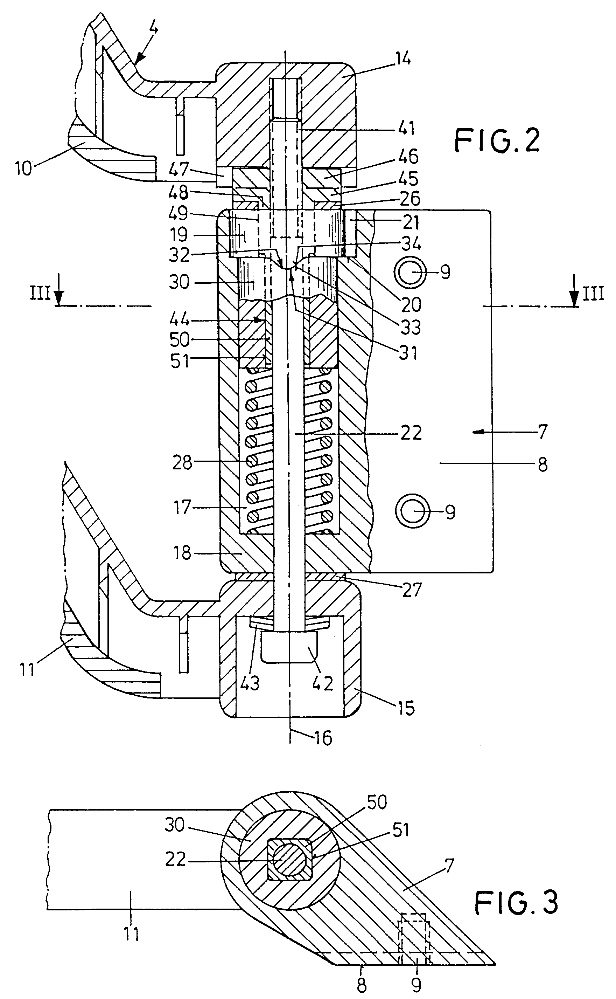

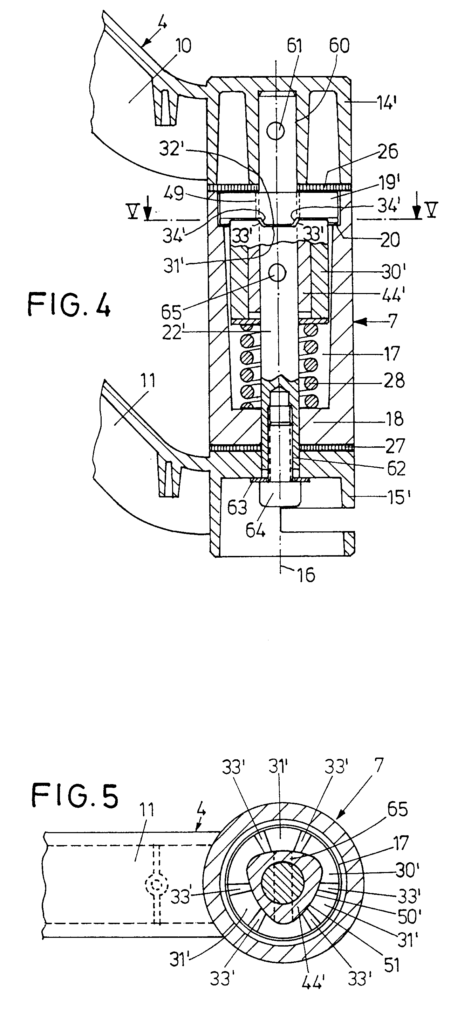

In den Fig. 2 und 3 ist eine erfindungsgemäße Halterung in einer ersten Ausführungsform dargestellt.

Der Lagerbock 7 weist einen konzentrisch zur Schwenkachse 16 verlaufenden zylindrischen Innenraum 17 auf, der zum Gelenkteil 15 des unteren Haltearms 11 durch einen Wandabschnitt 18 des Lagerbocks 7 abgeschlossen ist. Zum Gelenkteil 14 des oberen Haltearms 10 ist dieser Innenraum durch eine Rast-Scheibe 19 abgeschlossen, die gegen einen Ringbund 20 am Innenraum 17 axial in Richtung auf diesen hin festgelegt ist und die mittels einer Nut-Paßfeder-Verbindung 21 relativ zur Schwenkachse 16 drehfest mit dem Lagerbock 7 verbunden ist. Der Innenraum 17 wird konzentrisch zur Schwenkachse 16 von einem Bolzen 22 durchsetzt, der mittels eines Gewindes 41 in das Gelenkteil 14 des oberen Haltearms 10 geschraubt ist. Ein dem Gewinde 41 entgegengesetzter Kopf 42 des Bolzens 22 stützt sich über Teller-Federn 43 gegen den Gelenkteil 15 des unteren Haltearms 11 ab, wobei dieser Gelenkteil 15 ebenfalls vom Bolzen 22 durchsetzt wird.

Zwischen dem Gelenkteil 14 und der Rast-Scheibe 19 einerseits und zwischen dem Wandabschnitt 18 und dem unteren Gelenkteil 15 andererseits sind jeweils Reib-Scheiben 26,27 angeordnet, die zur Erzeugung einer ausreichend hohen Reibungskraft zwischen dem Haltearm 4 und dem Lagerbock 7 sorgen. Die Höhe dieser Reibungskraft hängt davon ab, wie weit der Bolzen 22 mit seinem Gewinde 41 in den Gelenkteil 14 eingeschraubt wird, d.h. wie stark die Teller-Federn 43 verspannt werden. Die Höhe der Reibungskraft entspricht also der Kraft, mit der die Teller-Federn 43 vorgespannt sind.

Im Innenraum 17 ist eine den Bolzen 22 umgebende, sich gegen den unteren Wandabschnitt 18 abstützende vorgespannte Schrauben-Druckfeder 28 angeordnet, die sich gegen eine Rast-Hülse 30 abstützt, welche wiederum im Innenraum 17 in Richtung der Schwenkachse 16 frei verschiebbar ist. Sie wird aufgrund der Vorspannung der Druckfeder 28 fest gegen die Rast-Scheibe 19 gedrückt.

Die Rast-Hülse 30 weist an ihrer der Rast-Scheibe 19 benachbarten Seite eine Rast-Ausnehmung 31 auf, in die ein an der zugewandten Seite der Rast-Scheibe 19 ausgebildeter Rast-Vorsprung 32 hineinragt. Der Vorsprung 32 und die Ausnehmung 31 weisen - wie Fig. 2 erkennen läßt - relativ zur Richtung der Schwenkachse 16 stark geneigte Flanken 33,34 auf, so daß bei einer Verdrehung der Rast-Hülse 30 gegenüber der Rast-Scheibe 19 um die Schwenkachse 16 die Rast-Scheibe 19 und die Rast-Hülse 30 in Richtung der Schwenkachse 16 auseinandergedrückt werden.

Um eine solche Verdrehung zu ermöglichen, ist eine Mitnehmer-Hülse 44 vorgesehen, die den Bolzen 22 umgibt. Sie weist an ihrer dem Gelenkteil 14 benachbarten Ende einen Flansch 45 auf, der an seiner Oberseite eine Paßfeder 46 trägt, die in eine angepaßte Nut 47 an der zugewandten Seite des Gelenkteils 14 eingreift. Diese Nut 47 durchsetzt den Gelenkteil 14 radial zur Schwenkachse 16 in vollem Umfang, so daß eine Montage durch seitliches Einschieben erfolgen kann. Der Flansch 45 bildet auch eine Anlagefläche für die Reibscheibe 26. An den Flansch 45 schließt sich ein zylindrischer Führungsabschnitt 48 an, der in einer entsprechenden Bohrung 49 in der Rast-Scheibe 19 radial zur Schwenkachse 16 frei drehbar geführt ist.

An den Führungsabschnitt 48 schließt sich ein die Rast-Hülse 30 durchsetzender unrunder Mitnahme-Abschnitt 50 an, bei dem es sich im vorliegenden Fall um einen Vierkant-Abschnitt handelt, wie Fig. 3 entnehmbar ist. Dieser Mitnahme-Abschnitt 50 ist in einer im Querschnitt angepaßten, die Rast-Hülse 30 in Richtung der Achse 16 durchsetzenden Ausnehmung 51 angeordnet, so daß die Mitnehmer-Hülse 44 drehfest mit der Rast-Hülse 30 verbunden ist, letztere aber in Richtung der Achse 16 gegenüber der Mitnehmer-Hülse 44 verschiebbar ist. Wenn der Haltearm 4 um die Schwenkachse 16 verschwenkt wird, dann nimmt der Mitnahme-Abschnitt 50 der Mitnehmer-Hülse 44 die Rast-Hülse 30 mit und verdreht diese relativ zur Rast-Scheibe 19, wodurch der Rast-Vorsprung 32 aus der Rast-Ausnehmung 31 über die Flanken 33 oder 34 herausgedreht wird. Hierbei wird dann die Rast-Hülse 30 gegen die Kraft der Schrauben-Druckfeder 28 in Richtung zur Druckfeder 28 hin verschoben.

Bei einer solchen Verdrehung ist weiterhin eine an den Reib-Scheiben 26, 27 wirkende Kraft zu überwinden, wobei diese Kraft - wie dargelegt - in weiten Bereichen einstellbar ist. Durch die Einstellbarkeit der Haftreibung der Reib-Scheiben 26, 27 ist eine hohe Vibrationsstabilität des Spiegels gegeben.

Nach Überwinden dieser Haftreibung ist dagegen ein relativ leichtes Wegklappen um die Schwenkachse 16 möglich.

Wie Fig. 2 entnehmbar ist, sind die Haltearme 10,11 hohl ausgebildet, wobei insbesondere der untere Haltearm 11 so ausgebildet ist, daß durch ihn ein nicht dargestelltes elektrisches Kabel geführt werden kann, das durch den Schwenkzapfen 13 nach außen unsichtbar in das Gehäuse 1 geführt wird.

In den Fig. 4 und 5 ist eine erfindungsgemäße Halterung in einer zweiten Ausführungsform dargestellt, die sich von der Ausführungsform gemaß den Fig. 2 und 3 nicht wesentlich unterscheidet. Funktional übereinstimmende Bauteile dieser Halterung sind daher mit übereinstimmenden Bezugsziffern gekennzeichnet, die zur Unterscheidung mit einem Apostroph versehen sind.

Zur Vermeidung von Wiederholungen werden im folgenden nur die Unterschiede der in den Fig. 4 und 5 gezeigten Ausführungsform gegenüber der Ausführungsform nach den Fig. 2 und 3 näher erläutert. Ansonsten kann auf die Beschreibung der letztgenannten Figuren zurückgegriffen werden.

Ein erster Unterschied besteht in der Anordnung des Bolzens 22', der den Innenraum 17 des Lagerbockes 7 konzentrisch zur Schwenkachse 16 durchsetzt. Der Bolzen 22' sitzt mit seinem bezüglich Fig. 4 oberen Ende unter Preßsitz in einer entsprechenden Ausnehmung 60 im Gelenkteil 14' des oberen Haltearms 10. Er ist dort durch einen radial durchgehenden Stift 61 gegen eine Verdrehung gegenüber dem Gelenkteil 14' gesichert.

Am entgegengesetzten Ende weist der Bolzen 22' ein axiales Innengewinde auf, in das unter Zwischenlage einer Beilagscheibe 63 eine Befestigungsschraube 64 eingeschraubt ist. Durch das Einschraubmoment dieser Befestigungsschraube 64 wird die Höhe der Reibungskraft zwischen dem Haltearm 4 und dem Lagerbock 7 unter Vermittlung der Reibscheiben 26,27 eingestellt.

Mit dem Bolzen 22' ist weiterhin die Mitnehmerhülse 44' über einen diese beiden Bauteile radial durchsetzenden Stift 65 drehfest verbunden. Diese Mitnehmerhülse 44' ist verglichen zum Ausführungsbeispiel gemäß den Fig. 2 und 3 kürzer ausgestaltet und steht mit dem Gelenkteil 14' lediglich mittelbar über den Bolzen 22' in Verbindung. Gleichwohl ist durch die drehfeste Verbindung zwischen der Mitnehmerhülse 44' und dem Bolzen 22' einerseits und zwischen dem Bolzen 22' und dem Gelenkteil 14' andererseits eine drehfeste Verbindung zwischen dem Gelenkteil 14' und der Mitnehmerhülse 44' gegeben.

Die Mitnehmerhülse 44' bildet mit ihrem Außenquerschnitt auf ihrer gesamten Länge einen Mitnahme-Abschnitt 50' für die Rast-Hülse 30', die im Innenraum 17 des Lagerbocks 7 in Richtung der Schwenkachse 16 frei verschiebbar ist. Dazu sind der Außenquerschnitt des Mitnahme-Abschnitts 50' der Mitnehmerhülse 44' und der Innenquerschnitt der Rast-Hülse 30' mit einer polygomzugförmigen Gestalt versehen. Im Gegensatz zum Ausführungsbeispiel nach den Fig. 2 und 3, wo diese Querschnitte etwa quadratisch ausgebildet sind, sind diese im Ausführungsbeispiel gemäß den Fig. 4 und 5 etwa dreieckförmig mit abgerundeten Eckbereichen ausgestaltet.

Als weiterer Unterschied zum Ausführungsbeispiel nach den Fig. 2 und 3 weist die Ausführungsform gemäß den Fig. 4 und 5 eine Rast-Hülse 30' auf, die an ihrer der Rast-Scheibe 19' benachbarten Seite mit drei gleichmäßig über den Umfang dieser in Draufsicht etwa ringförmig ausgestalteten Seite verteilten Rast-Ausnehmungen 31' versehen ist, in die jeweils an der zugewandten Seite der Rast-Scheibe 19' ausgebildete Rast-Vorsprünge 32' hineinragen.

Analog dem Ausführungsbeispiel nach den Fig. 2 und 3 nimmt der Mitnahme-Abschnitt 50' der Mitnehmer-Hülse 44' die Rast-Hülse 30' bei einer Verschwenkung des Haltearms 4 um die Schwenkachse 16 mit und verdreht die Rast-Hülse 30' relativ zur Rast-Scheibe 19', wodurch die Rast-Vorsprünge 32' aus den Rast-Ausnehmungen 31' über deren Flanken 33' bzw. 34' herausgedreht werden. Hierbei wird dann analog die Rast-Hülse 30' gegen die Kraft der Schrauben-Druckfeder 28 in Richtung zur Druckfeder hin verschoben,

Im übrigen ist darauf hinzuweisen, daß die Rast-Scheibe 19' analog dem Ausführungsbeispiel gem. den Fig. 2 und 3 über eine (in Fig. 4 und 5 nicht dargestellte) Nut-Paßfeder-Verbindung relativ zur Schwenkachse 16 drehfest mit dem Lagerbock 7 verbunden ist. Darüberhinaus stützt sich die Rast-Scheibe 19' mit ihren radial über die Mitnehmer-Hülse 44' hinausstehenden Bereichen ihrer Rast-Vorsprünge 32' auf dem Ringbund 20 am Innenraum 17 axial in Richtung auf diesen hin ab.

Abschließend wird daraufhingewiesen, daß in den Fig. 4 und 5 Anlageflächen zur Anbringung des Lagerbocks 7 an einem Führerhaus eines Nutzfahrzeuges der Einfachheit halber weggelassen wurden.

## Patentansprüche

1. Halterung für einen Außenspiegel für ein Nutzfahrzeug, mit einem Haltearm (4), dessen eines Ende mit einem Spiegel verbindbar ist und dessen anderes Ende an einem mit dem Nutzfahrzeug verbindbaren Lagerbock (7) um eine Schwenkachse (16) schwenkbar angebracht ist, wobei der Haltearm (4) gegen ein Reibmoment und unter Lösen einer elastischen Rastverbindung gegenüber dem Lagerbock (7) verschwenkbar ist, wobei die Rastverbindung einen Rast-Vorsprung (32,32') und eine Rast-Ausnehmung (31,31') umfaßt, die ineinandergreifen und die an einem gegenüber dem Lagerbock (7) festen Teil (19,19') und einem gegenüber dem Lagerbock (7) in Richtung der Schwenkachse (16) gegen die Kraft einer Druckfeder (28) verschiebbaren Teil (30,30') ausgebildet sind, und wobei mit dem Haltearm (4) ein Mitnehmer drehfest verbunden ist, auf dem der verschiebbare Teil (30,30') drehfest aber in Richtung der Schwenkachse (16) verschiebbar geführt ist, dadurch gekennzeichnet, daß der Mitnehmer als Mitnehmer-Hülse (44,44') ausgebildet ist, die mittels einer Steckverbindung (46,47 bzw. 61,65) mit dem Haltearm (4) drehfest verbunden ist.

2. Halterung nach Anspruch 1, dadurch gekennzeichnet, daß das in Richtung der Schwenkachse (16) verschiebbare Teil als Rast-Hülse (30,30') ausgebildet ist, die auf einem Mitnahme-Abschritt (50,50') der Mitnehmer-Hülse (44,44') drehfest geführt ist.

3. Halterung nach Anspruch 1 oder 2, dadurch gekennzeichnet, daß der Haltearm (4) mit dem Lagerbock (7) mittels eines Bolzens (22,22') verbunden ist, der die Mitnehmer-Hülse (44,44') durchsetzt.

4. Halterung nach einem der Ansprüche 1 bis 3, dadurch gekennzeichnet, daß zwischen dem Haltearm (4) und dem Lagerbock (7) mindestens eine Reib-Scheibe (26 bzw. 27) angeordnet ist.

5. Halterung nach Anspruch 3, dadurch gekennzeichnet, daß das Reibmoment zwischen dem Haltearm (4) und Lagerbock (7) mittels des Bolzens (22) einstellbar ist.

6. Halterung nach Anspruch 2, dadurch gekennzeichnet, daß der Mitnahme-Abschnitt (50,50') der Mitnehmer-Hülse (44,44') im Außenquerschnitt und die Rast-Hülse (30,30') im Innenquerschnitt jeweils eine einander entsprechende, polygonzugförmige Gestalt aufweisen.

7. Halterung nach Anspruch 3, dadurch gekennzeichnet, daß die Mitnehmer-Hülse (44') drehfest mit dem Bolzen (22') und dieser drehfest mit dem Haltearm (4) verbunden sind.

8. Halterung nach Anspruch 7, dadurch gekennzeichnet, daß die drehfesten Verbindungen zwischen Mitnehmer-Hülse (44') und Bolzen (22') einerseits und Bolzen (22') und Haltearm (4) andererseits durch Verstiftungen (61,65) gebildet sind.

9. Halterung nach Anspruch 3 und 4, dadurch gekennzeichnet, daß der Haltearm (4) als doppelarmiger Haltearm ausgebildet ist, der mit Gelenkteilen (14',15') den Lagerbock (7) umgreift, daß der Bolzen (22') an einem Ende mit einem Gelenkteil (14') drehfest, insbesondere durch eine Verstiftung (61) verbunden ist und daß das andere Gelenkteil (15') mittels einer in das andere Ende des Bolzens (22') eingeschraubten Schraube (64) gegenüber dem Lagerbock (7) verspannt ist.

10. Halterung nach Anspruch 2, dadurch gekennzeichnet, daß die Rast-Hülse (30') einerseits und das gegenüber dem Lagerbock (7) feste Teil (19') der Rastverbindung andererseits mit einer Vielzahl von ineinandergreifenden Rast-Vorsprüngen (32') bzw. Rast-Ausnehmungen (31') versehen ist.

## Claims

1. A holding device for an external rear-view mirror for a commercial vehicle with a support arm (4), of which one end is connectable with a mirror and of which the other end is arranged on a pillow block (7), which is connectable with the commercial vehicle, in a manner pivotable about a pivot axis (16), wherein the support arm (4) is pivotable against a friction moment relative to the pillow block (7) upon release of an elastic locking connection, which locking connection comprises a locking nose (32, 32') and a locking recess (31, 31') engaging with one another and formed on a component part (19, 19') stationary relative to the pillow block (7) and on a component part (30, 30') displaceable relative to the pillow block (7) in the direction of the pivot axis (16) against the force of a compression spring (28), and wherein a driver is non-rotatably connected with the support arm (4), the displaceable component part (30, 30') being guided on the driver non-rotatably but displaceably in the direction of the pivot axis (16), characterized in that the driver is in the form of a driver sleeve (44, 44') non-rotatably connected with the support arm (4) by means of a plug connection (46, 47 and 61, 65 respectively).

2. A holding device according to claim 1, characterized in that the component part displaceable in the direction of the pivot axis (16) is in the form of a locking sleeve (30, 30') non-rotatably guided on a driving section (50, 50') of the driver sleeve (44, 44').

3. A holding device according to claim 1 or 2, characterized in that the support arm (4) is connected with the pillow block (7) by means of a bolt (22, 22'), which passes through the driver sleeve (44, 44').

4. A holding device according to one of claims 1 through 3, characterized in that at least one friction disk (26 and 27, respectively) is arranged between the support arm (4) and the pillow block (7).

5. A holding device according to claim 3, characterized in that the friction moment between the support arm (4) and the pillow block (7) is adjustable by means of the bolt (22).

6. A holding device according to claim 2, characterized in that both the outer cross-section of the driving section (50, 50') of the driver sleeve (44, 44') and the inner cross-section of the locking sleeve (30, 30') are polygonal in shape, one corresponding to the other.

7. A holding device according to claim 3, characterized in that the driver sleeve (44') is connected non-rotatably with the bolt (22'), and the latter is connected non-rotatably with the support arm (4).

8. A holding device according to claim 7, characterized in that the non-rotatable connections between the driver sleeve (44') and the bolt (22') on the one hand and the bolt (22') and the support arm (4) on the other hand are formed by pins (61, 65).

9. A holding device according to claim 3 or 4, characterized in that the support arm (4) is in the form of a double-armed support arm, surrounding the pillow block (7) with joints (14', 15'), in that one end of the bolt (22') is non-rotatably connected with a joint (14'), in particular by means of a pin (61), and in that the other joint (15') is braced relative to the pillow block (7) by means of a screw (64) being screwed into the other end of the bolt (22').

10. A holding device according to claim 2, characterized in that the locking sleeve (30') on the one hand and the part of the locking connection (19') that is stationary relative to the pillow block (7) on the other hand are provided with a plurality of locking noses (32') and locking recesses (31'), respectively, engaging with one another.

## Revendications

1. Support pour un rétroviseur extérieur destiné à un véhicule utilitaire, comprenant un bras de support (4) dont une extrémité peut être reliée à un miroir de rétroviseur, et donc l'autre extrémité est montée de manière à pouvoir pivoter autour d'un axe de pivotement (16) dans un support de palier (7) pouvant être relié au véhicule utilitaire, le bras de support (4) pouvant être pivoté à l'encontre d'un couple de friction et en interrompant une liaison élastique par encliquetage par rapport au support de palier (7), la liaison par encliquetage comprenant une protubérance d'encliquetage (32, 32') et un évidement d'encliquetage (31, 31'), qui sont en prise réciproque et sont réalisés sur une pièce (19, 19') fixe par rapport au support de palier (7) et sur une pièce (30, 30') pouvant coulisser par rapport au support de palier (7) dans la direction de l'axe de pivotement (16), à' l'encontre de la force d'un ressort de compression (28), et un entraîneur étant relié de manière fixe en rotation au bras de support (4), entraîneur sur lequel la pièce coulissante (30, 30') est guidée de manière fixe en rotation, mais coulissante dans la direction de l'axe de pivotement (16), caractérisé en ce que l'entraîneur est réalisé en tant que douille d'entraînement (44, 44'), qui est liée de manière fixe en rotation au bras de support (4) au moyen d'une liaison par emmanchement (46, 47 et 61, 65).

2. Support selon la revendication 1, caractérisé en ce que la pièce susceptible de coulisser dans la direction de l'axe de pivotement (16), est réalisée sous forme de douille d'encliquetage (30, 30'), qui est guidée de manière fixe en rotation sur un tronçon d'entraînement (50, 50') de la douille d'entraînement (44, 44').

3. Support selon la revendication 1 ou 2, caractérisé en ce que le bras de support (4) est relié au support de palier (7) au moyen d'une broche (22, 22') qui traverse la douille d'entraînement (44, 44').

4. Support selon l'une des revendications 1 à 3, caractérisé en ce qu'entre le bras de support (4) et le support de palier (7) est disposée au moins une rondelle de friction (26 et 27).

5. Support selon la revendication 3, caractérisé en ce que le couple de friction entre le bras de support (4) et le support de palier (7) peut être réglé au moyen de la broche (22).

6. Support selon la revendication 2, caractérisé en ce que le tronçon d'entraînement (50, 50') de le douille d'entraînement (44, 44') présente en section transversale extérieure, et la douille d'encliquetage (30, 30') en section transversale intérieure, chacune une configuration de forme polygonale mutuellement correspondante.

7. Support selon la revendication 3, caractérisé en ce que le douille d'entraînement (44') est reliée de manière fixe en rotation à la broche (22'), et celle-ci de manière fixe en rotation au bras de support (4).

8. Support selon la revendication 7, caractérisé en ce que les liaisons fixes en rotation entre la douille d'entraînement (44, 44') et la broche (22') d'une part, et la broche (22') et le bras de support (4) d'autre part, sont réalisées par goupilles (61, 65).

9. Support selon les revendications 3 et 4, caractérisé en ce que le bras de support (4) est réalisé sous forme de bras de support à deux bras, qui enserre le support de palier (7) par des pièces, de palier (14', 15'), en ce que la broche (22'), à une extrémité, est liée de manière fixe en rotation, notamment par goupille (61), à une pièce de palier (14'), et en ce que l'autre pièce de palier (15') est serrée par rapport au support de palier (7), au moyen d'une vis (64) vissée dans l'autre extrémité de la broche (22').

10. Support selon la revendication 2, caractérisé en ce que la douille d'encliquetage (30') d'une part et la pièce (19') de la liaison par encliquetage, fixe par rapport au support de palier (7), d'autre part, sont pourvues respectivement d'un grand nombre de protubérances d'encliquetage (32') et d'évidements d'encliquetage (31') en prise réciproque.
